# EUROPEAN PATENT APPLICATION

(11) **EP 3 879 400 A1**
(43) Date of publication of application: **15.09.2021**
(21) Application number: 20162626.4
(22) Date of filing: 12.03.2020
(51) Int. Cl.: G06F 9/445, B60W 60/00

(54) **METHOD AND DEVICE FOR CONFIGURING A SYSTEM ARCHITECTURE OF AN AUTONOMOUS VEHICLE**

(71) Applicant: VOLKSWAGEN AG, 38440 Wolfsburg (DE); Argo AI GmbH, 80805 München (DE)
(72) Inventor: Kain, Tobias, 3281 Oberndorf/Melk (AT); Müller, Julian-Steffen, 30161 Hannover (DE); Wesche, Maximilian, 31234 Edemissen (DE); Decke, Hendrik, 38104 Braunschweig (DE); Mundhenk, Philipp, 85635 Höhekirchen-Siegertsbrunn (DE)
(74) Representative: Patentanwälte Bressel und Partner mbB

(57) **Abstract**

The invention relate to a method for configuring a system architecture (20) of an autonomous vehicle (50), wherein the system architecture (20) comprises a plurality of application instances (21-x) and a plurality of computation nodes (22-x), wherein the application instances (21-x) are distributed and executed on the computation nodes (22-x) according to a configuration (30), wherein measured sensor data (10) of at least one sensor (51) is input to at least part of the application instances (21-x), and wherein at least part of the application instances (21-x) creates and provides control signals (25) for controlling the vehicle (50), wherein at least one context information (11) of a prevailing context is gathered, and wherein the configuration (30) is adapted according to the at least one gathered context information (11). The invention further relates to a device (1) for configuring a system architecture (20) of an autonomous vehicle (50) and a vehicle (50) with at least one such device (1).

## Description

The invention relates to a method and a device for configuring a system architecture of an autonomous vehicle.

Present day vehicles are equipped with various driver assistance systems that support the driver while operating the vehicle. Assistance function include, for example, keeping the distance to a preceding vehicle, autonomous parking, or switching lanes on highways. Although these functions are highly reliable and well tested, the driver is still constrained to monitor their behavior and take over the control, if required.

Fully autonomous vehicles do not allow such take over actions, hence the system responsible for operating the car has to be designed in a fail-operational manner, i.e. the system has to handle faults autonomously.

Although handling faults by performing an emergency stop is feasible, such behavior is not desirable since this will cause customer satisfaction to decline. On the other hand, increasing the fault-acceptance rate might cause vehicles to operate unintentionally, leading to a loss of customer confidence. Therefore, solutions to handle these situations are required.

The invention is based on the technical problem of developing a method and a device for configuring a system architecture of an autonomous vehicle, in which the system configuration can be adapted automatically.

According to the invention, the technical problem is solved by a method having the features of claim 1 and a device having the features of claim 14. Advantageous embodiments of the invention emerge from the dependent claims.

In particular a method is proposed for configuring a system architecture of an autonomous vehicle, wherein the system architecture comprises a plurality of application instances and a plurality of computation nodes, wherein the application instances are distributed and executed on the computation nodes according to a configuration, wherein measured sensor data of at least one sensor is input to at least part of the application instances, and wherein at least part of the application instances creates and provides control signals for controlling the vehicle, wherein at least one context information of a prevailing context is gathered, and wherein the configuration is adapted according to the at least one gathered context information.

Further, a device for configuring a system architecture of an autonomous vehicle is proposed, wherein the system architecture comprises a plurality of application instances and a plurality of computation nodes, wherein the application instances are distributed and executed on the computation nodes according to a configuration, wherein measured sensor data of at least one sensor is input to at least part of the application instances, and wherein at least part of the application instances creates and provides control signals for controlling the vehicle; comprising a context gathering device, and a reconfiguration device, wherein the context gathering device is configured to gather at least one context information of a prevailing context, and wherein the reconfiguration device is configured to adapt the configuration according to the at least one gathered context information.

The method and the device allow to automatically reconfigure the system architecture of the autonomous vehicle to adapt to a change of a prevailing situation that the vehicle is experiencing and/or a change occurring in the system architecture (e.g. faults of application instances and/or computation nodes). Hereby faults and a change of context-related requirements can be automatically handled. This is achieved by gathering at least one context information of a context in which the vehicle and the system architecture are currently operated in. According to the gathered at least one context information the configuration of the system architecture, i.e. the application instances and the computation nodes, is adapted, which means the configuration is adapted depending on or in consideration of the at least one context information, such that the system architecture is accommodated to the prevailing context. In particular, it is decided how the configuration has to be adapted given the at least one context information with the goal to adapt the configuration in the best possible way to the prevailing context. The at least one context information is in particular used as input parameter(s) when determining the adapted configuration. For example, the configuration can be adapted by using a set of rules which determines the adaption or the adapted configuration using the at least one context information as input parameter(s).

An application instance is in particular a process which provides a specific functionality and which is executed on at least one computation node. As an example, an application instance can provide one of the following functionalities in the field of autonomous driving: environment perception, localization, navigation, trajectory planer, or prognosis of ego behavior and/or the behavior of objects in the environment of the vehicle etc. For this, measured sensor data of at least one sensor is input to at least part of the application instances and at least part of the application instances creates and provides control signals for controlling the vehicle based on this data. In particular, the application instances can be operated in an active and at least one passive operation mode. Also, an isolated operation mode can be provided, for example, when a faulty application instance is deactivated. In the active operation mode the application instance has direct influence on the control of the vehicle. In the at least one passive operation mode the application instance runs redundantly alongside a similar active application instance, wherein the passive application instance receives the same input data and creates the same output data or output signals as the active application instance, but without influence on the control of the vehicle. Multiple levels of passive operation modes can be provided. These only differ in the time which is required to switch the passive application instance over to the active operation mode. In particular, active and passive application instances are constantly monitored, such that in case a fault in one of the instances is detected countermeasures can be effected, such as changing the configuration.

A configuration comprises in particular a mapping of the application instances to individual computation nodes, i.e. which application instance is executed on which computation node. A configuration can also comprise an activation or deactivation of computation nodes and the setting of the operation state. In particular, the configuration can be dependent on predetermined redundancy requirements, which depend on the functionality of the application instances and on the prevailing context. For example, a redundancy requirement can demand a single or multiple redundancy. In this case a given functionality is provided by an active instance and a single or multiple passive application instances. Different application scenarios can have different redundancy requirements, e.g. a single redundancy for a pedestrian detection on a motor highway versus a multiple redundancy for a pedestrian detection in a play street.

A context comprises in particular a description of at least part of the parameters and/or properties which are characteristic of a situation which the vehicle is currently experiencing.

A vehicle is in particular a motor vehicle. In principle, a vehicle can also be another land, water, air, rail or space vehicle.

In particular the at least one context information can comprise at least one fault information, wherein the at least one fault information describes faults occurring in application instances and/or computation nodes. For example, application instances which operate faulty or which have stopped unexpectedly and/or computation nodes which are faulty or damaged can be described in such a fault information. The configuration can then be adapted, for example, by adapting the configuration in such a way that the application instances are restarted again, possibly on a different computation node, and/or the faulty computation node is switched off and application instances which have been executed on the faulty computation node are redistributed on the remaining computation nodes.

Part of the gathering device and/or the reconfiguration device can be provided separately or jointly with other devices as a combination of hardware and software, e.g. as program code that is executed on a microcontroller or microprocessor.

In one embodiment, provision is made for the context information to comprise at least one user context information and/or at least one user request. This allows to change the configuration according to a user state and/or a user action, a user being in particular a passenger of the vehicle. A user context information can comprise a state of the user of the vehicle, for example a health state, a metabolic state and/or an attention state. A user request, i.e. in particular a passenger request, is a request to realize a certain state and/or a certain strategy while driving. For example, such a strategy can comprise the shortest possible transportation time and/or the most comfortable and/or energy efficient route etc. Also a user request can comprise a certain level of amenities provided by the vehicle during the driving, e.g. a certain level of entertainment and/or comfort. When the configuration is adapted, the at least one user context information and/or the at least one user request are taken into account.

In one embodiment, provision is made for the context information to comprise at least one environment information, wherein the at least one environment information is captured by at least one sensor of the vehicle and/or is retrieved by communicating with at least one backend server. An environment information in particular describes a state of the environment. For example the at least one environment information can comprise one or more of the following: a season information, a time information (day, night, hour, minute etc.), a weather information (sunny, cloudy, rough, windy, snow, fog, rain etc.), road conditions (paved highway, rural route, gravel street etc.), a scene context information (countryside, rural area, urban environment, small city, big city, industrial park, residential neighborhood etc.). The at least one environment information can be captured by at least one sensor, e.g. a camera, a radar sensor, a lidar sensor an ultrasonic sensor and/or a rain sensor etc. Alternatively or in addition the at least one environment information can be retrieved by communicating, for example, with a cloud service or a backend server which provides weather and/or traffic information etc. For example the configuration can be adapted as a result of context information which marks a time of day or a daylight status, for example by changing a perception functionality from an application instance that is optimized for night perception to an application instance that is optimized for daytime perception.

In one embodiment, provision is made for the context information to comprise at least one vehicle information. A vehicle information can be captured by at least one sensor of the vehicle and/or can be retrieved from a vehicle control, for example, via a Controller Area Network (CAN)-Bus of the vehicle. A vehicle information can be, for example, a battery state of charge (SOC), a remaining range, power consumption parameters etc. For example, an application instance providing an entertainment functionality can be deactivated, if the vehicle information indicates a battery state of charge that is below a value that is required to complete the requested route etc.

In one embodiment, adapting the configuration comprises optimizing the configuration according to at least one optimization criterion. This allows to optimize the configuration to certain ends. Such an optimization criterion can be the following: energy efficiency, a maximum comfort during driving, use of preferred roads and/or routes, minimum and/or preferable redundancy requirements etc.

In a developing embodiment, the at least one optimization criterion is selected and/or defined according to the at least one context information. This allows to automatically select the at least one optimization criterion. In particular, this allows to have an optimal solution to a given scenario, i.e. a prevailing context. For example, the optimization criterion can be to extend the range to complete a planned route without a recharge or refill, if a vehicle information indicates a low battery or a low fuel level.

In one embodiment, adapting the configuration comprises selecting and/or defining application instance requirements according to the at least one gathered context information. The application instance requirements in particular comprise CPU and memory demands.

In a developing embodiment, the application instance requirements are defined by using implication rules which are specified and applied using a declarative programming language. This allows to easily express and/or code the implication rules.

In one embodiment, adapting the configuration comprises selecting a set of application instances according to the at least one gathered context information and/or determining redundancy requirements of the application instances according to the at least one gathered context information and/or determining hardware and/or software segregation requirements of the application instances according to the at least one gathered context information. Hardware segregation in particular defines the number of different computation nodes redundant application instances have to be executed on. Software segregation in particular defines the number of different (types of) operation systems the application instances have to be executed on.

In one embodiment, adapting the configuration comprises optimally assigning application instances to the computation nodes.

In a developing embodiment, the assigning comprises applying at least one of the following methods to find the optimal assignment: integer linear programming, evolutionary game theory, reinforcement learning.

In one embodiment, adapting the configuration comprises safety validation of the adapted configuration. In particular, the safety validation is conducted before the adapted configuration is assigned to the computation nodes, i.e. before it is activated. The safety validation particularly comprises checking, if all redundancy requirements and software and hardware segregation requirements are met.

In one embodiment, the method is constantly repeated such that the configuration is continuously adapted according to the prevailing context. This allows to constantly have a configuration that is adapted to the prevailing situation and requests of the passengers of the vehicle. Hence comfort and safety can be ensured.

The individual embodiments of the device in each case correspond to the embodiments of the method. The advantages of the device are in each case the same as for the embodiments of the method.

Further, also a vehicle is proposed, comprising at least one device according to any one of the described embodiments.

The invention is explained in greater detail below on the basis of preferred exemplary embodiments with reference to the drawings. In the drawings:
- Fig. 1: shows an embodiment of the device for configuring a system architecture of an autonomous vehicle;
- Fig. 2: shows a schematic overview of an embodiment of the method, wherein three logical layer are used.

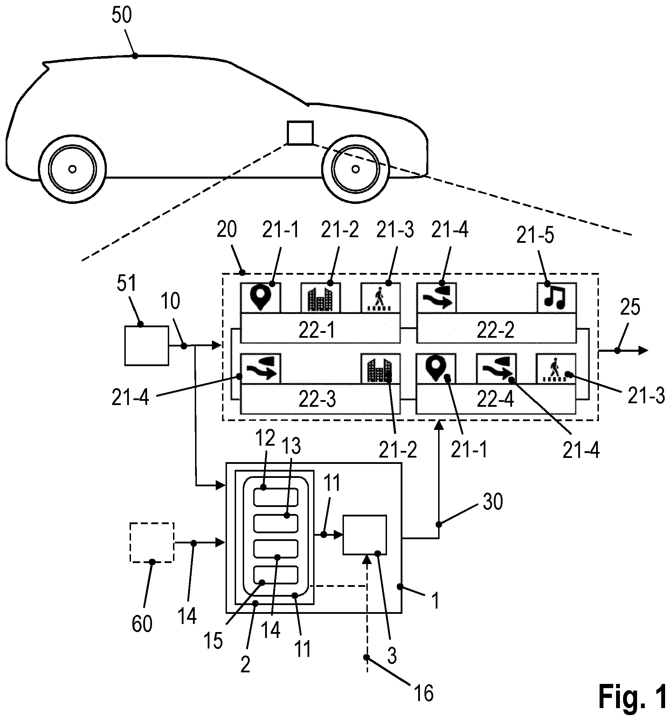

Figure 1 shows an embodiment of the device 1 for configuring a system architecture of an autonomous vehicle 50.

The system architecture 20 of the autonomous vehicle 50 comprises a plurality of application instances 21-x and a plurality of computation nodes 22-x, wherein the application instances 21-x are distributed and executed on the computation nodes 22-x according to a configuration 30. Measured sensor data 10 of at least one sensor 51 is input to at least part of the application instances 21-x and at least part of the application instances 21-x creates and provides control signals 25 for controlling the vehicle 50.

For example, the application instances 21-x can provide the following functionalities: navigation (21-1), object detection in an urban environment (21-2), pedestrian detection (21-3), trajectory planner (21-4), and audio entertainment (21-5). Security relevant application instances 21-x are executed redundantly on multiple computation nodes 22-x (e.g. application instances 21-3, 21-4).

The device 1 comprises a gathering device 2 and a reconfiguration device 3. The gathering device 2 and the reconfiguration device 3 can be provided separately or jointly with other devices as a combination of hardware and software, e.g. as program code that is executed on a microcontroller or microprocessor.

The gathering device 2 gathers at least one context information 11 of a prevailing context. The gathered at least one context information 11 is delivered to the reconfiguration device 3.

The context information 11 may comprise at least one user context information 12 and/or one user request 13.

The context information 11 may comprise at least one environment information 14, wherein the at least one environment information 14 is captured by at least one sensor 51 of the vehicle and/or is retrieved by communicating with at least one backend server 60.

The context information 11 may comprise at least one vehicle information 15. For example, a vehicle information 15 can be a state-of-charge (SOC) of a vehicle battery or a remaining range of the vehicle. The at least one vehicle information 15 can be retrieved, for example, from a control of the vehicle via a Controller Area Network (CAN)-bus.

The reconfiguration device 3 adapts the configuration 30 of the application instances 21-x according to the at least one gathered context information 11. This allows to adapt the configuration 30, i.e. the mapping of the application instances 21-x to the computation nodes 22-x, according to a prevailing context, such that the system architecture 20 can best handle the current situation and safety is ensured.

In particular, the method is constantly repeated such that the configuration 30 is continuously adapted according to the prevailing context.

The adapting of the configuration 30 may comprise optimizing the configuration 30 according to at least one optimization criterion 16. The optimization criterion 16 may be set by a user, i.e. a passenger, operator and/or owner of the vehicle 50. The optimization is in particular performed by the reconfiguration device 3. An optimization criterion 16 can be, for example, energy efficiency, comfort, transportation time etc.

The at least one optimization criterion 16 may be selected and/or defined according to the at least one context information 11. This allows to change to at least one optimization criterion 16 which leads to an optimal configuration 30 for the prevailing context and situation.

Adapting the configuration 30 may comprise selecting and/or defining application instance requirements according to the at least one gathered context information 11. The application instance requirements in particular define a set of application instances 21-x which is necessary to handle the prevailing context.

The application instance requirements may be defined by using implication rules which are specified and applied using a declarative programming language. Hence a reasoning as to which application instances 21-x are necessary and/or preferable under given circumstances can be realized.

Adapting the configuration 30 may comprise selecting a set of application instances 21-x according to the at least one gathered context information 11 and/or determining redundancy requirements of the application instances 21-x according to the at least one gathered context information 11 and/or determining hardware and/or software segregation requirements of the application instances 21-x according to the at least one gathered context information 11. This way a "tailor-made" configuration 30 for a prevailing context can be provided.

Adapting the configuration 30 in particular comprises optimally assigning application instances 21-x to the computation nodes 22-x. In particular, an assignment which satisfies the requirements demanded from the adapted configuration 30 is selected. If more than one solution exist to this assignment problem, a further optimization can be performed. The assigning can be solved by methods which comprise, for example, integer linear programming, evolutionary game theory, or reinforcement learning.

In particular, adapting the configuration 30 comprises safety validation of the adapted configuration 30 before the assignment is executed. The safety validation in particular comprises a verification that redundancy requirements and/or software and hardware segregation requirements can be met by the adapted configuration 30.

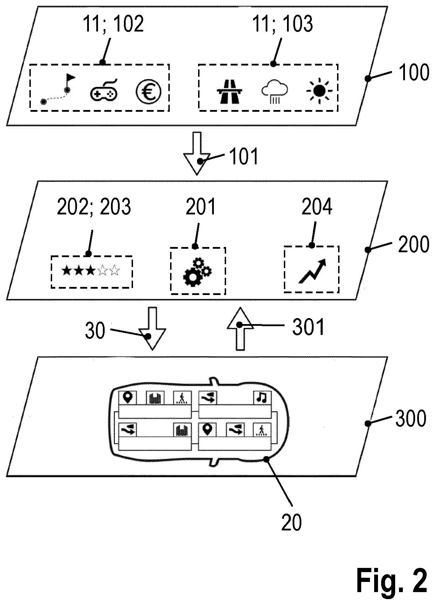

Figure 2 shows a schematic overview of an embodiment of the method, wherein three logical layer are used: a context layer 100, a reconfiguration layer 200, and an architecture layer 300. The functions of the layers 100, 200, 300 are executed, for example, by the gathering device and the reconfiguration device or, alternatively, by a combined device.

The context layer 100 determines the prevailing context the vehicle is in by gathering at least one context information 11. Further, it extracts requirements 101 affecting the actions of the layers 200, 300. Mission goals 102, such as a target destination, a requested level of entertainment, or the road and/or ride type paid for, as well as environmental conditions, such as the current weather situation and/or the road and/or traffic conditions are examples for parameters influencing the decision regarding the requirements in the form of context information 11.

In a first example, the context may be the following: A premium ride on a highway in wintry condition. These context information imply, for example, that the set of required applications (possibly provided by single or multiple application instances) include a pedestrian detection, a trajectory planner which takes rough weather conditions into account, and an entertainment application.

In a second example, the context may be the following: A low-budget ride in an urban environment under good weather conditions. These context information 11 imply, that the set of required applications (possibly provided by single or multiple application instances) include a pedestrian detection, a trajectory planner which takes the good weather conditions into account, and an application for computing tasks received from cloud services.

The examples above are provided for illustrative purposes only. In reality the requirements can be much more extensive and demanding.

From the context information 11 also the safety-criticality of the respective applications can be derived and thus requirements 101 for the level of redundancy, as well as other performance parameters can be derived.

As an illustrative example, the level of redundancy of the pedestrian detection in the first example can be much lower than in the second example, since the likelihood of encountering a pedestrian on a highway is much lower than in an urban environment.

The context information 11 can be, in particular, derived from sensor data captured by at least one sensor of the vehicle and/or by communicating with a backend server and/or by interacting with the passengers of the vehicle.

The application instance requirements 101 are defined, in particular, by using implication rules which are specified and applied using a declarative programming language.

The requirements 101 determined by the context layer 100 are used as input for the reconfiguration layer 200. The reconfiguration layer 200 evaluates the received requirements 101 and plans further actions considering the prevailing context. These action may include, for example, selecting a set of applications, determining their redundancy and software and hardware segregation requirements as well as optimizing the entire system architecture. The reconfiguration layer performs the reconfiguration computation 201.

The task of determining a context-based adapted configuration 30, i.e. a mapping between application instances and computation nodes that respects the prevailing context, is not trivial since the placement decisions depend on various parameters.

The input of this "application placement problem" is a set of application instances and a set of computation nodes. Furthermore, for each application instance and each computation node a set of parameters including, for example, performance parameters 202 such as the minimum required memory and CPU demand as well as safety parameters 203 like the minimum required level of redundancy and hardware segregation are defined. The output of the application placement problem is a configuration 30 in the form of an assignment that maps each application instance to exactly one node.

In order to restrict the number of valid assignments, constraints based on the specified parameters can be defined. Depending on the specified constraints, either none, one, or multiple valid assignments exist. In case that there are different solutions, an optimization function 204 in consideration of at least one optimization criterion can be defined that specifies which assignments are the most desired.

This optimization function 204 may also depend on the prevailing context. Therefore, an approach allowing a context-based update of the at least one optimization criterion leads to configurations that are well adjusted to the current situation.

For solving the "application placement problem", various optimization approaches can be used, for example, integer linear programming, evolutionary game theory, or reinforcement learning approaches.

The architecture layer 300 executes the tasks responsible for interacting with the system architecture of the vehicle, i.e. the application instances and computation nodes. One main task of the architecture layer 300 is to apply the reconfiguration actions determined by the reconfiguration layer 200.

The challenge is to ensure a fast, safe, and organized configuration roll-out. Furthermore, it has always to be ensured that the reconfiguration actions do not decrease the level of safety. Therefore, safety-validation operations have to be executed prior to the configuration roll-out. Besides applying reconfiguration actions, i.e. applying the adapted configuration 30, also monitoring the state of the computation nodes and the executed application instances is an important task. Self-awareness requires monitoring the status of the system to maintain an operational state. The application instances, for example, are configured to assess their current performance and report faults. Monitoring the system, in turn, depends in general on the observation of several level-specific data.

Concerning safety, different levels may define different requirements for a minimum operational capability. Since full vehicle autonomy excludes human takeover actions, classical fault tolerance is not sufficient as errors may have various causes and interference effects. Failure handling requires knowledge of cross-layer dependencies. Thus system monitoring and self-awareness are cross-layer problems, such that system changes 301 are reported back to the reconfiguration layer 200, such that they can affect the adapting of the configuration 30.

### List of reference numerals

- 1: device
- 2: context gathering device
- 3: reconfiguration device
- 10: measured sensor data
- 11: context information
- 12: user context information
- 13: user request
- 14: environment information
- 15: vehicle information
- 16: optimization criterion
- 20: system architecture
- 21-x: application instance
- 22-x: computation node
- 25: control signal
- 30: configuration
- 50: vehicle
- 51: sensor
- 60: backend server
- 100: context layer
- 101: requirement
- 200: reconfiguration layer
- 201: reconfiguration computation
- 202: performance parameters
- 203: safety parameters
- 204: optimization function
- 300: architecture layer
- 301: system changes

## Claims

1. Method for configuring a system architecture (20) of an autonomous vehicle (50),
wherein the system architecture (20) comprises a plurality of application instances (21-x) and a plurality of computation nodes (22-x), wherein the application instances (21-x) are distributed and executed on the computation nodes (22-x) according to a configuration (30), wherein measured sensor data (10) of at least one sensor (51) is input to at least part of the application instances (21-x), and wherein at least part of the application instances (21-x) creates and provides control signals (25) for controlling the vehicle (50),
wherein at least one context information (11) of a prevailing context is gathered, and wherein the configuration (30) is adapted according to the at least one gathered context information (11).

2. Method according to claim 1, wherein the context information (11) comprises at least one user context information (12) and/or one user request (13).

3. Method according to any one of the preceding claims, wherein the context information (11) comprises at least one environment information (14), wherein the at least one environment information (14) is captured by at least one sensor (51) of the vehicle (50) and/or is retrieved by communicating with at least one backend server (60).

4. Method according to any one of the preceding claims, wherein the context information (11) comprises at least one vehicle information (15).

5. Method according to any one of the preceding claims, wherein adapting the configuration (30) comprises optimizing the configuration (30) according to at least one optimization criterion (16).

6. Method according to claim 5, wherein the at least one optimization criterion (16) is selected and/or defined according to the at least one context information (11).

7. Method according to any one of the preceding claims, wherein adapting the configuration (30) comprises selecting and/or defining application instance requirements (101) according to the at least one gathered context information (11).

8. Method according to claim 7, wherein the application instance requirements (101) are defined by using implication rules which are specified and applied using a declarative programming language.

9. Method according to any one of the preceding claims, wherein adapting the configuration (30) comprises selecting a set of application instances (21-x) according to the at least one gathered context information (11) and/or determining redundancy requirements of the application instances (21-x) according to the at least one gathered context information (11) and/or determining hardware and/or software segregation requirements of the application instances (21-x) according to the at least one gathered context information (11).

10. Method according to any one of the preceding claims, wherein adapting the configuration (30) comprises optimally assigning application instances (21-x) to the computation nodes (22-x).

11. Method according to claim 10, wherein the assigning comprises applying at least one of the following methods to find the optimal assignment: integer linear programming, evolutionary game theory, reinforcement learning.

12. Method according to any one of the preceding claims, wherein adapting the configuration (30) comprises safety validation of the adapted configuration (30).

13. Method according to any one of the preceding claims, wherein the method is constantly repeated such that the configuration (30) is continuously adapted according to the prevailing context.

14. Device (1) for configuring a system architecture (20) of an autonomous vehicle (50), wherein the system architecture (20) comprises a plurality of application instances (21-x) and a plurality of computation nodes (22-x), wherein the application instances (21-x) are distributed and executed on the computation nodes (22-x) according to a configuration (30), wherein measured sensor data (10) of at least one sensor (51) is input to at least part of the application instances (21-x), and wherein at least part of the application instances (21-x) creates and provides control signals (25) for controlling the vehicle (50), comprising:
a context gathering device (2), and
a reconfiguration device (3),
wherein the context gathering device (2) is configured to gather at least one context information (11) of a prevailing context, and
wherein the reconfiguration device (3) is configured to adapt the configuration (30) according to the at least one gathered context information (11).

15. Vehicle (50) comprising at least one device (1) according to claim 14.
